# EUROPÄISCHE PATENTSCHRIFT

(11) **EP 1 055 360 B1**
(45) Veröffentlichungstag und Bekanntmachung des Hinweises auf die Patenterteilung: **04.09.2002**
(21) Anmeldenummer: 00110691.3
(22) Anmeldetag: 19.05.2000
(51) Int. Cl.: A01D 57/04

(54) **Schneidwerk mit nicht-blockierender Haspelbefestigung**
Cutting mechanism with non-blocking reel mount
Dispositif de coupe avec fixation non-bloquante du rabatteur

(30) Priorität: 28.05.1999 US 321815
(43) Veröffentlichungstag der Anmeldung: 29.11.2000
(73) Patentinhaber: DEERE & COMPANY, Moline, Illinois 61265-8098 (US)
(72) Erfinder: Stivers, Michelle Lynn, Davenport, IA 52802 (US); Salley, Gordon Lee, Moline, IL 61265 (US)
(74) Vertreter: Holst, Sönke, Dr.

(56) Entgegenhaltungen:
- DE-U- 9 214 178
- US-A- 5 768 870

## Beschreibung

Die Erfindung betrifft ein Schneidwerk mit einer Haspel, die drehbar an einer Befestigungsklammer gelagert ist, welche auf einem schwenkbaren Haspelträgerarm mit unrundem, insbesondere rechteckigem Querschnitt gelagert ist (e.g. DE-U- 9 214 178).

Schneidwerke für Mähdrescher haben in der Regel an beiden seitlichen Enden des Schneidwerks schwenkbar angebrachte Haspelträgerarme. Die Haspelträgerarme werden durch hydraulische Hebezylinder in vertikaler Richtung bewegt, um eine daran befestigte Haspel anzuheben oder abzusenken, wie es für unterschiedliche Erntegüter und -bedingungen jeweils erforderlich ist. Außerdem ist die Haspel entlang der Haspelträgerarme verschiebbar, um die Position der Haspel weiter einstellen zu können. Die Haspelträgerarme sind in der Regel aus einem rechteckigen Rohr hergestellt. Eine Befestigungsklammer für die Haspel stützt sich an jedem Haspelträgerarm ab und umfasst einen im wesentlichen U-förmigen Aufbau, der eine obere Wand und Seitenwände aufweist, die je einen Haspelträgerarm umschließen. Die Befestigungsklammern tragen einen Lagerungszusammenbau, um die Haspel drehbar zu lagern.

Eine verschiebbare Lagerung ist zwischen der oberen Oberfläche der Haspelträgerarme und der Befestigungsklammer für die Haspel angeordnet, um die vor- und zurückverlaufende Schiebebewegung der Befestigungsklammern auf den Haspelträgerarmen zu unterstützen. Die Seitenwände der Befestigungsklammern sind nur geringfügig von den Seitenoberflächen der Haspelträgerarme beabstandet, um eine seitliche Bewegung der Haspel relativ zu den Haspelträgerarmen zu unterbinden.

Die hydraulischen Zylinder, die die Haspelträgerarme anheben und absenken umfassen in der Regel einen steuernden Zylinder an einem Haspelträgerarm und einen gesteuerten Zylinder am anderen Haspelträgerarm, die gemeinhin als Master- und Slave-Zylinder bekannt sind. Während der anfänglichen Beaufschlagung, d. h. des Füllens der Zylinder mit Hydraulikflüssigkeit, wird sich der steuernde Zylinder füllen und sich in Gänze ausdehnen, bevor der gesteuerte Zylinder sich zu füllen und auszudehnen beginnt. Der an den steuernden Zylinder gekoppelte Haspelträgerarm wird angehoben, während der andere Haspelträgerarm, der an den gesteuerten Zylinder gekoppelt ist, in seiner tiefstmöglichen Stellung verbleibt. Das Ergebnis des Anhebens eines Haspelträgerarms ohne Anheben des anderen ist eine Verdrehung oder Rotation der Befestigungsklammern relativ zu den Trägerarmen. Ein begrenzter Betrag an Verdrehung der Befestigungsklammern ist zulässig, bevor sich die Befestigungsklammern an den Haspelträgerarmen verkanten und blockieren. Eine Beschädigung kann entstehen, wenn das eine Ende der Haspel noch weiter angehoben wird.

Die der Erfindung zugrunde liegende Aufgabe wird darin gesehen, eine Haspelbefestigung zu schaffen, die nicht blockiert, wenn bei der anfänglichen Beaufschlagung nur ein Zylinder angehoben wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung schlägt eine Haspelbefestigung vor, die eine seitliche Lagerung zwischen beiden seitlichen Oberflächen des Haspelträgerarms und der jeweils benachbarten Seitenwand der Befestigungsklammer für die Haspel umfasst. Die seitliche Lagerung ermöglicht, die Befestigungsklammer größer zu gestalten, mit einem größeren Abstand zwischen den Seitenwänden der Befestigungsklammer und den seitlichen Oberflächen der Haspelträgerarme. Durch die seitlichen Lagerungen können sich die Befestigungsklammern relativ zu den Haspelträgerarmen (um deren Achse) drehen und den größeren Abstand zwischen den Seitenwänden der Befestigungsklammer und den Trägerarmen ausnutzen, ohne zu verkanten und zu blockieren. Die seitlichen Lagerungen stellen eine Abstützung bereit, die eine seitliche Verschiebung der Befestigungsklammern auf den Haspelträgerarmen verhindert. Die Lagerung ist in der Regel an der Befestigungsklammer vorgesehen und wird beim horizontalen Verschieben der Befestigungsklammer entlang des Haspelträgerarms mit ihr verschoben. Die Lagerung liegt somit am Haspelträgerarm an und ist eine Gleitlagerung. Es wäre aber auch denkbar, den Haspelträgerarm mit einer über seine Länge verlaufenden, an ihm befestigten Gleit-Lagerung auszustatten.

Auf diese Weise wird eine nicht-blockierende Haspelbefestigung bereitgestellt, die es erlaubt, das Schneidwerk mit einem größeren Hubweg der Haspel auszustatten, so dass höhere Erntegüter eingebracht werden können. Außerdem ist für Wartungszwecke ein vergrößerter Abstand zwischen Haspel und Boden des Schneidwerks einstellbar.

In der Regel ist die Haspel an ihren beiden Enden an einer Befestigungsklammer gelagert, die jeweils auf einem Haspelträgerarm verschiebbar gelagert ist.

Der Haspelträgerarm kann in an sich bekannter Weise mittels hydraulischer Hebezylinder verschwenkt werden, um die Haspel anzuheben und abzusenken.

Die erfindungsgemäße, nicht-blockierende Haspelbefestigung erweist sich insbesondere als vorteilhaft, wenn ein erster Hebezylinder früher als ein zweiter Hebezylinder anspricht, was dann der Fall ist, wenn der erste Hebezylinder ein steuernder Zylinder und der zweite Hebezylinder ein gesteuerter Zylinder ist, die anfänglich (erstmals) mit Druck beaufschlagt werden.

Die Lagerung kann zusätzlich zur Lagerung zur seitlichen Abstützung der Befestigungsklammer eine obere Lagerung zwischen der oberen Wand der Befestigungsklammer und der oberen Oberfläche des Haspelträgerarms umfassen. Diese Lagerung überträgt die Last der Haspel auf den Haspelträgerarm und erleichtert das Verschieben der Befestigungsklammer entlang des Haspelträgerarms.

Die Lagerungen, die das seitliche Verschieben der Befestigungsklammer auf dem Haspelträgerarm unterbinden, sind vorzugsweise im wesentlichen an der Mitte der Haspelträgerarme angeordnet und erstrecken sich in Längsrichtung des Haspelträgerarms. Diese Lagerungen sind bevorzugt mit einer abgerundeten Oberfläche versehen, welche im Kontakt mit den Haspelträgerarmen steht.

Alternativ ist eine einzelne Lagerung an der Oberseite des Haspelträgerarms denkbar, die sich zwischen den Seitenwänden der Befestigungsklammer erstreckt und die oberen Ecken des Haspelträgerarms umschließt. Die Lagerung stellt eine seitliche Abstützung der Befestigungsklammer bereit und ermöglicht der Befestigungsklammer, sich um eine - anstelle nahe seiner Mitte - nahe der oberen Oberfläche des Haspelträgerarms liegende Achse zu drehen.

Schließlich ist anzumerken, dass erfindungsgemäße Befestigungsklammern auch an bereits vorhandenen Schneidwerken nachgerüstet werden können.

In den Zeichnungen sind zwei nachfolgend näher beschriebene Ausführungsbeispiele der Erfindung dargestellt. Es zeigt:
- Fig. 1: eine perspektivische Ansicht eines Schneidwerks mit nicht-blockierenden Haspelbefestigungen nach der vorliegenden Erfindung;
- Fig. 2: eine frontseitige schematische Ansicht des Schneidwerks, in der die erfindungsgemäßen nicht-blockierenden Haspelbefestigungen illustriert werden;
- Fig. 3: eine frontseitige schematische Ansicht wie Figur 2, in der ein Haspelträgerarm in während der anfänglichen Beaufschlagung des steuernden Zylinders angehobener Stellung dargestellt ist;
- Fig. 4: eine vergrößerte perspektivische Ansicht einer erfindungsgemäßen nicht-blockierenden Haspelbefestigung;
- Fig. 5: eine vergrößerte frontseitige Ansicht der nicht-blockierenden Haspelbefestigung, in der die verdrehende Bewegung der Befestigungsklammer relativ zum Haspelträgerarm dargestellt ist;
- Fig. 6: eine frontseitige schematische Ansicht einer alternativen Ausführungsform einer erfindungsgemäßen nicht-blockierenden Haspelbefestigung;
- Fig. 7: eine Seitenansicht einer Lagerung, die Merkmale zum Halten der Lagerung an Ort und Stelle in der Befestigungsklammer zur Befestigung der Haspel vor der Anbringung des Haspelträgerarms zeigt.

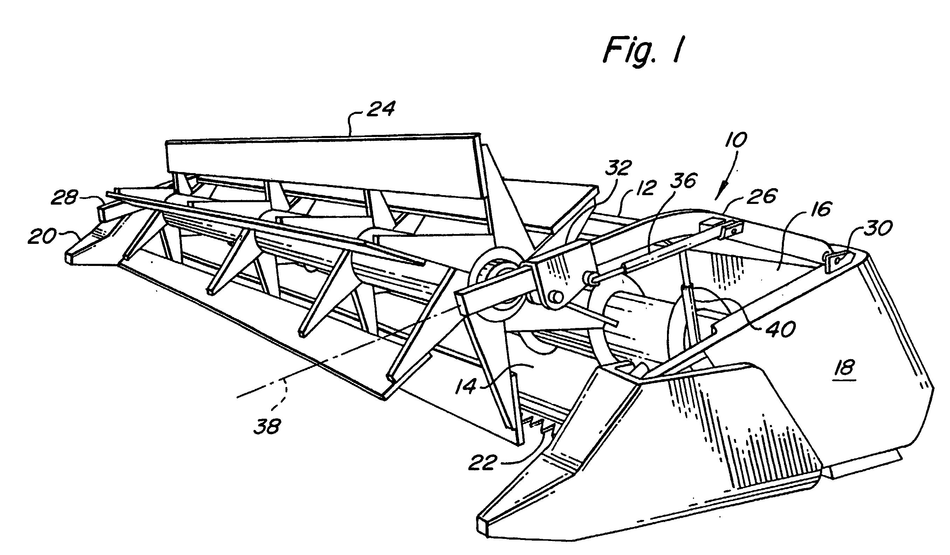

Die nicht-blockierende erfindungsgemäße Haspelbefestigung ist in dem in Figur 1 gezeigten Schneidwerk 10 zur Getreideernte verwirklicht. Das Schneidwerk 10 umfasst einen Rahmen, der generell mit 12 gekennzeichnet ist, einen Boden 14, eine Rückwand 16 und Seitenwände 18, 20, die an gegenüberliegenden Enden des Schneidwerks angeordnet sind. Ein Mähwerksbalken 22 ist an der vorderen Kante des Bodens 14 bereitgestellt, um Erntegut abzuschneiden. Eine mit einem nicht dargestellten Motor angetriebene Haspel 24 dreht sich oberhalb des Mähwerksbalkens 22, um Erntegut gegen den Mähwerksbalken 22 zu drücken.

Die Haspel 24 ist am Rahmen 12 des Schneidwerks 10 durch ein Paar Haspelträgerarme 26, 28 befestigt, die durch Stifte 30 an jedem Ende des Schneidwerks 10 drehbar (schwenkbar) am Rahmen 12 befestigt sind. Befestigungsklammern 32, 34 zur Befestigung der Haspel 24 sind an jedem der Haspelträgerarme 26, 28 bereitgestellt. Hydraulische Zylinder 36, von denen nur einer gezeigt ist, werden benutzt, um die Befestigungsklammern 32, 34 in Längsrichtung entlang der Achse 38 der Haspelträgerarme 26, 28 zu bewegen.

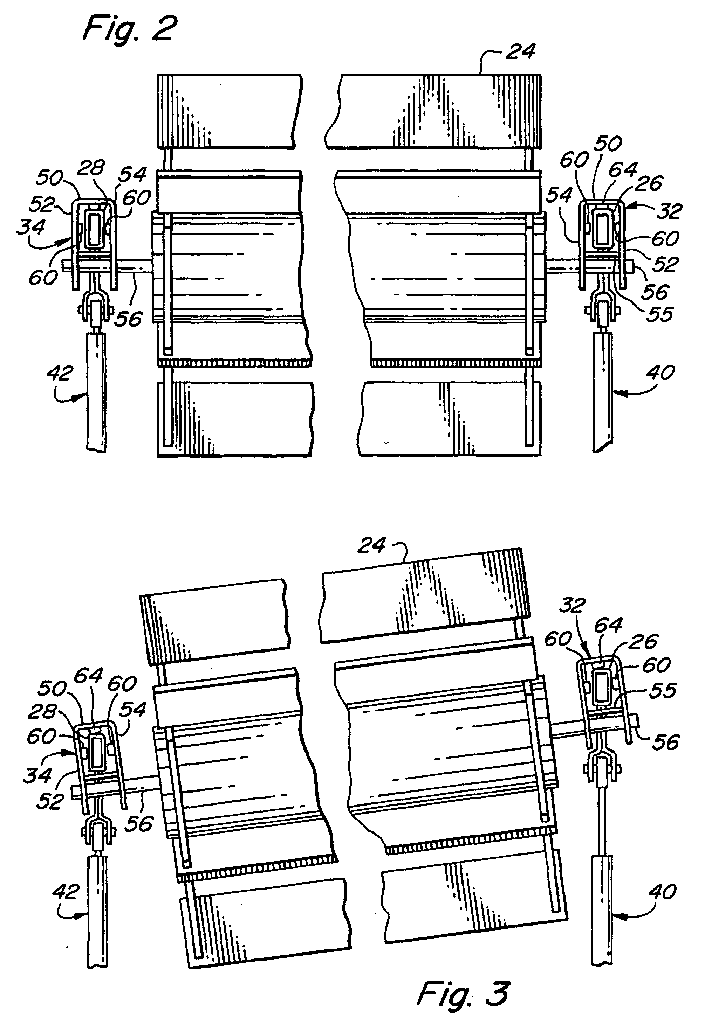

Je ein hydraulischer Hebezylinder 40, 42 ist zwischen dem Rahmen 12 des Schneidwerks 10 und jedem der Haspelträgerarme 26, 28 bereitgestellt, um die Haspel 24 durch eine Drehung der Haspelträgerarme 26, 28 um die Stifte 30 anzuheben. Der Hebezylinder 40 ist ein steuernder Zylinder während der Hebezylinder 42 ein gesteuerter Zylinder ist. Während des anfänglichen Füllens oder Beaufschlagens der Zylinder mit hydraulischer Flüssigkeit wird sich der steuernde Zylinder 40 zuerst füllen und völlig ausdehnen, bevor der gesteuerte Zylinder 42 sich zu füllen und auszudehnen beginnt. Im Ergebnis wird der Haspelträgerarm 26 sich in seine volle Höhe heben, bevor der Haspelträgerarm 28 sich zu heben beginnt. Das führt zu einer Neigung der Haspel 24, wie sie in Figur 3 gezeigt ist.

Die nicht-blockierende Haspelbefestigung gemäß der vorliegenden Erfindung erlaubt der Haspel 24, wie in Figur 3 dargestellt, verschwenkt zu werden, ohne dass die Befestigungsklammern 32, 34 sich auf den Haspelträgerarmen 26, 28 verkanten und blockieren. Die Haspelträgerarme 26, 28 sind im wesentlichen rechteckigen Querschnitts und haben obere, untere und seitliche Oberflächen. Die Befestigungsklammern 32, 34 haben wiederum eine obere Wand 50 und voneinander beabstandete Seitenwände 52, 54, die um die obere und seitliche Oberfläche der Haspelträgerarme 26, 28 gelegt sind. Die Befestigungsklammern haben außerdem in der Regel ein Querelement 55 nahe des Haspelträgerarms 26, 28. Die Seitenwände 52, 54 erstrecken sich nach unten unter die Haspelträgerarme 26, 28, um die Drehachse 56 der Haspel 24 drehbar zu lagern. Die Haspel 24 kann auch oberhalb der Haspelträgerarme 26, 28 drehbar gelagert sein.

Die Seitenwände 52, 54 der Befestigungsklammern 32, 34 sind von den seitlichen Oberflächen der Haspelträgerarme 26, 28 beabstandet, um den Befestigungsklammern 32, 34 einen Spielraum zu geben, so dass sie sich relativ zu den Haspelträgerarmen 26, 28 drehen können, falls ein Ende der Haspel 24 wie in Figur 3 angehoben ist. Das ermöglicht, dass sich der steuernde Zylinder 40 vor jeglicher Ausdehnung des gesteuerten Zylinders 42 völlig ausdehnt, ohne ein Verkanten und Blockieren zwischen dem Haspelträgerarm 26, 28 und den Befestigungsklammern 32, 34 zu bedingen.

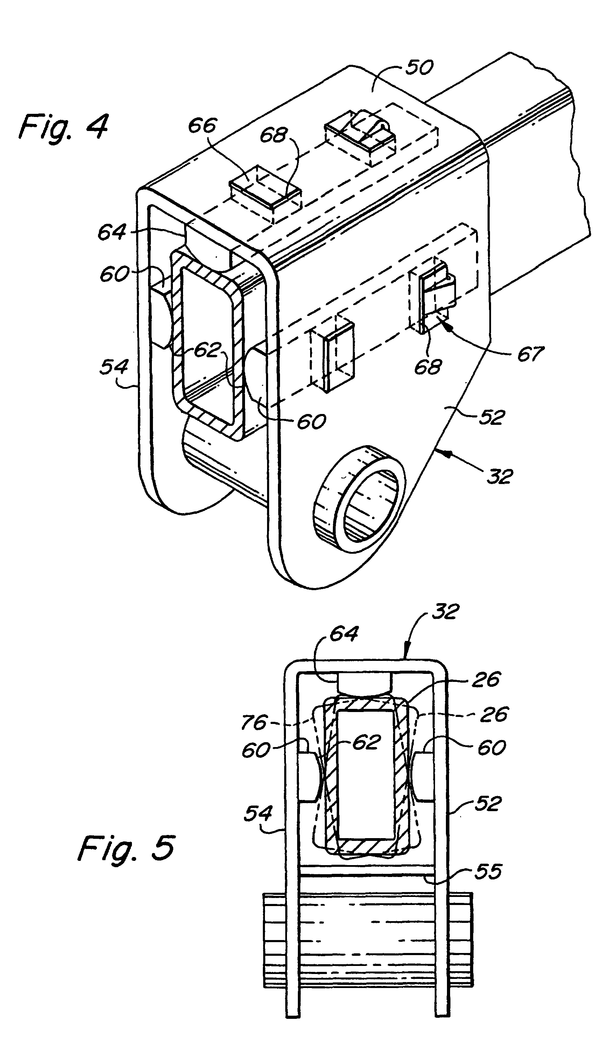

Seitliche Lagerungen 60 sind zwischen den Seitenwänden 52, 54 jeder Befestigungsklammer 32, 34 und dem jeweiligen Haspelträgerarm 26, 28 positioniert, um eine seitliche Bewegung oder Verschiebung der Befestigungsklammern 32, 34 relativ zu den Haspelträgerarmen 26, 28 zu vermeiden. Die Lagerungen 60 sind entlang der Mitte der Haspelträgerarme 26, 28 angeordnet, um eine Drehung der Befestigungsklammern 32, 34 relativ zu den Haspelträgerarmen 26, 28 zu ermöglichen, wie in Figur 5 gezeigt ist. Die innere, im Eingriff mit dem Haspelträgerarm 26, 28 befindliche Oberfläche 62 der seitlichen Lagerung 60 ist ballig gedreht oder abgerundet, um die Drehung der Befestigungsklammern 32, 34 zu erleichtern.

Eine obere Lagerung 64 ist zwischen den oberen Oberflächen der Haspelträgerarme 26, 28 und der oberen Wand 50 der Befestigungsklammern 32, 34 bereitgestellt. Die obere Lagerung 64 trägt das Gewicht der Haspel 24 auf den Haspelträgerarmen 26, 28 und erleichtert eine Gleitbewegung der Befestigungsklammern entlang des Haspelträgerarms 26, 28. Die Lagerungen 60, 64 sind vorzugsweise aus Delrin-Acetal-Harz gegossen oder gespritzt. Um die Komplexität des Teils zu vermindern und den Zusammenbau zu erleichtern, sind die obere Lagerung 64 und die seitlichen Lagerungen 60 vorzugsweise identisch.

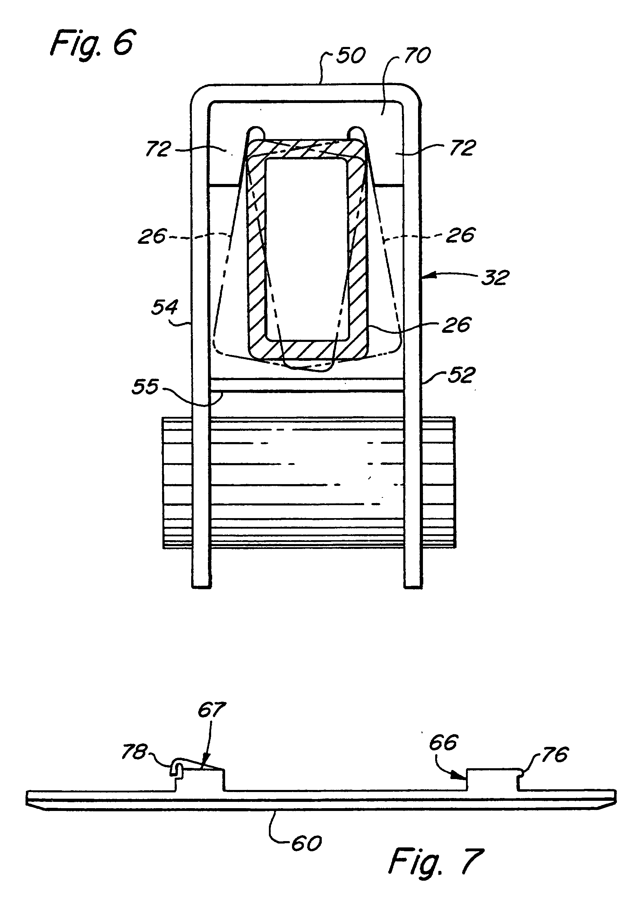

Die seitlichen und oberen Lagerungen 60, 64 werden durch Stutzen 66, 67 an Ort und Stelle gehalten, die sich durch Öffnungen 68 in der oberen Wand 50 und den Seitenwänden 52, 54 der Befestigungsklammer 32, 34 erstrecken. Sobald der Haspelträgerarm 26, 28 angebracht ist, gibt es nicht genug Spiel für die Stutzen 66, 67 der Lagerungen 60, 64, um aus den Öffnungen 68 herauszukommen, so dass die Lagerungen 60, 64 an ihren Stellen gehalten werden. Die Stutzen 66, 67 haben vorzugsweise Merkmale, die Lagerungen 60, 64 an der Befestigungsklammer 32, 34 zu arretieren, bevor der Haspelträgerarm 26, 28 angebracht ist. Diese Merkmale werden in Figur 7 gezeigt. Der Stutzen 66 umfasst an einer Vorderkante einen Wulst 76, der über die äußere Kante der Öffnung 68 in der Befestigungsklammer 32, 34 passt. Der Stutzen 67 wiederum umfasst eine nach hinten weisende elastische Nase 78, die über die äußere Kante der zugehörigen Öffnung 68 passt. Der Wulst 76 und die Nase 78 halten die Lagerung 60, 64 während des Zusammenbaus an Ort und Stelle, bevor die Befestigungsklammer 32, 34 auf dem Haspelträgerarm 26, 28 angeordnet ist. Die Stutzen 66, 67 haltern die Lagerungen 66, 67 auch während der Verschiebung der Haspel 24 entlang der Haspelträgerarme 26, 28 an den Befestigungsklammern 32, 34 fest.

Eine alternative Ausführungsform der Erfindung wird in Figur 6 gezeigt. Dort sind der Haspelträgerarm 26 und die Befestigungsklammer 32 dieselben wie in der vorigen Ausführungsform. Eine einzelne, größere obere Lagerung 70 hat die drei seitlichen und oberen Lagerungen 60, 64 ersetzt. Die Lagerung 70 bedeckt die Oberseite des Haspelträgerarms 26 und erstreckt sich zwischen den zwei Seitenwänden 52, 54 der Befestigungsklammer 32. Die Lagerung 70 umfasst Eckabschnitte 72, die die oberen Ecken des Haspelträgerarms 26 umschließen. Die Lagerung 70 stellt eine Abstützung bereit, um eine seitliche Verschiebung der Haspel 24 zu unterbinden. Die Eckabschnitte 72 ermöglichen eine Drehung der Befestigungsklammer 32 relativ zum Haspelträgerarm 26 um eine nahe der Oberseite des Haspelträgerarms 26 liegende Achse. Die Lagerung 70 erstreckt sich längs entlang des Haspelträgerarms 26 wie die in Figur 4 gezeigten Lagerungen 60, 64. Ein oder mehrere nach oben weisende Stutzen sind bereitgestellt, die Lagerung 70 in der Befestigungsklammer 32 in derselben Weise wie die zuvor beschriebenen Stutzen 66, 67 zu haltern.

Die erfindungsgemäße Haspelbefestigung ermöglicht es einem Hebezylinder, sich vor jeglicher Ausdehnung des anderen Hebezylinders komplett auszudehnen, ohne eine Verkantung oder Blockierung zwischen den Befestigungsklammern der Haspel und den Haspelträgerarmen zu bedingen. Die Haspelbefestigung kann so dimensioniert werden, dass sie jeden gewünschten Betrag der Vertikalbewegung der Haspel 24 bereitstellt. Die Hebezylinder 40, 42 müssen anfänglich bei der Herstellung des Schneidwerks 10 beaufschlagt werden und es kann sich als notwendig erweisen, sie während der Lebensdauer des Schneidwerks nach Wartungsdiensten am hydraulischen System des Schneidwerks neu zu füllen.

## Patentansprüche

1. Schneidwerk (10) mit einer Haspel (24), die drehbar an einer Befestigungsklammer (32, 34) gelagert ist, welche auf einem schwenkbaren Haspelträgerarm (26, 28) mit nichtkreisförmigem, insbesondere rechteckigem Querschnitt gelagert ist, **dadurch gekennzeichnet, dass** zwischen dem Haspelträgerarm (26, 28) und der Befestigungsklammer (32, 34) ein Abstand vorhanden ist, der eine Drehung der Befestigungsklammer (32, 34) relativ zum Haspelträgerarm (26, 28) erlaubt, und dass zwischen der Befestigungsklammer (32, 34) und dem Haspelträgerarm (26, 28) mindestens eine Lagerung (60, 70) vorgesehen ist, die eine seitliche Verschiebung der Befestigungsklammer (32, 34) auf dem Haspelträgerarm (26, 28) unterbindet.

2. Schneidwerk (10) nach Anspruch 1, **dadurch gekennzeichnet, dass** die Befestigungsklammer (32, 34) eine obere Wand (50) und Seitenwände (52, 54) aufweist, die die seitlichen Oberflächen und die obere Oberfläche des Haspelträgerarms (26, 28) umschließen.

3. Schneidwerk (10) nach Anspruch 1 oder 2, **dadurch gekennzeichnet, dass** die Haspel (24) an ihren beiden Enden an je einer Befestigungsklammer (32, 34) gelagert ist, die verschiebbar auf einem schwenkbaren Haspelträgerarm gelagert ist.

4. Schneidwerk (10) nach Anspruch 3, **dadurch gekennzeichnet, dass** je ein hydraulischer Hebezylinder (40, 42) zwischen jedem Haspelträgerarm (26, 28) und einem Rahmen des Schneidwerks (10) angeordnet ist.

5. Schneidwerk (10) nach Anspruch 4, **dadurch gekennzeichnet, dass** einer der Hebezylinder (40) ein steuernder Zylinder ist, der einen Haspelträgerarm (26) hebt und der andere Hebezylinder (42) ein gesteuerter Zylinder ist, der den anderen Haspelträgerarm (28) hebt, wobei während eines anfänglichen Füllens der Hebezylinder (40, 42) mit hydraulischer Flüssigkeit der steuernde Zylinder (40) zuerst gefüllt wird und sich ausdehnt, bevor der gesteuerte Zylinder (42) gefüllt wird und sich ausdehnt, so dass zuerst der eine Haspelträgerarm (26) angehoben wird, bevor der andere Haspelträgerarm (28) angehoben wird.

6. Schneidwerk (10) nach einem der vorhergehenden Ansprüche, **dadurch gekennzeichnet, dass** die mindestens eine Lagerung zwischen der Befestigungsklammer (32, 34) und dem Haspelträgerarm (26, 28) eine obere Lagerung (64, 70) zwischen der oberen Wand (50) der Befestigungsklammer (32, 34) und dem Haspelträgerarm (26, 28) umfasst.

7. Schneidwerk (10) nach einem der vorhergehenden Ansprüche, **dadurch gekennzeichnet, dass** die mindestens eine Lagerung zwischen der Befestigungsklammer (32, 34) und dem Haspelträgerarm (26, 28) seitliche Lagerungen (60) zwischen den Seitenwänden (52, 54) der Befestigungsklammer (32, 34) und den seitlichen Oberflächen des Haspelträgerarms (26, 28) umfasst, die vorzugsweise wenigstens näherungsweise auf einer Mittelachse des Haspelträgerarms (26, 28) liegen.

8. Schneidwerk nach Anspruch 7, **dadurch gekennzeichnet, dass** die seitlichen Lagerungen (60) eine abgerundete Oberfläche aufweisen, die im Kontakt mit dem Haspelträgerarm (26, 28) steht.

9. Schneidwerk (10) nach einem der vorhergehenden Ansprüche, **dadurch gekennzeichnet, dass** die mindestens eine Lagerung zwischen der Befestigungsklammer (32) und dem Haspelträgerarm (26, 28) eine einzelne Lagerung (70) an der Oberseite des Haspelträgerarms (26) umfasst, die sich zwischen den beiden Seitenwänden (52, 54) der Befestigungsklammer (32) erstreckt und die die oberen Ecken des Haspelträgerarms (26) umschließt.

10. Mit einer Lagerung (60, 64, 70) versehene Befestigungsklammer (32, 34) wie in den vorhergehenden Ansprüche definiert für ein Schneidwerk (10) nach einem der vorhergehenden Ansprüche.

## Claims

1. A cutter-head (10) with a reel (24) which is mounted rotatably on a mounting bracket (32, 34), which is mounted on a pivoting reel support arm (26, 28) with a non-circular, especially a rectangular cross-section, **characterized in that** there is a space between the reel support arm (26, 28) and the mounting bracket (32, 34) which allows rotation of the mounting bracket (32, 34) relative to the reel support arm (26, 28) and **in that** at least one boss (60, 70) is provided between the mounting bracket (32, 34) and the reel support arm (26, 28) preventing lateral displacement of the mounting bracket (32, 34) on the reel support arm (26, 28).

2. A cutter-head (10) according to claim 1, **characterized in that** the mounting bracket (32, 34) has an upper wall (50) and sidewalls (52, 54), which embrace the side surfaces and the upper surface of the reel support arm (26, 28).

3. A cutter-head (10) according to claim 1 or 2, **characterized in that** the reel (24) is mounted at each of its two ends on an mounting bracket (32, 34), which is mounted slidably on a pivoting reel support arm.

4. A cutter-head (10) according to claim 3, **characterized in that** a respective lift cylinder (40, 42) is fitted between each reel support arm (26, 28) and a frame of the cutter-head (10).

5. A cutter-head (10) according to claim 4, **characterized in that** one of the lift cylinders (40) is a master cylinder which raises one reel support arm (26) and the other lift cylinder (42) is a slave cylinder which raises the other reel support arm (28), wherein the master cylinder (40) is filled and extends first during initial filling of the lift cylinders (40, 42) with hydraulic fluid, before the slave cylinder (42) is filled and extends, so that the one reel support arm (26) is raised first, before the other reel support arm (28) is raised.

6. A cutter-head (10) according to any of the preceding claims, **characterized in that** the at least one boss between the mounting bracket (32, 34) and the reel support arm (26, 28) comprises an upper boss (64, 70) between the upper wall (50) of the mounting bracket (32, 34) and the reel support arm (26, 28).

7. A cutter-head (10) according to any of the preceding claims, **characterized in that** the at least one boss between the mounting bracket (32, 34) and the reel support arm (26, 28) comprises side bosses (60) between the sidewalls (52, 54) of the mounting bracket (32, 34) and the side surfaces of the reel support arm (26, 28), preferably lying at least approximately on a central axis of the reel support arm (26, 28).

8. A cutter-head (10) according to claim 7, **characterized in that** the side bosses (60) have a rounded surface which is in contact with the reel support arm (26, 28).

9. A cutter-head (10) according to any of the preceding claims, **characterized in that** the at least one boss between the mounting bracket (32) and the reel support arm (26, 28) comprises a single boss (70) on the upper side of the reel support arm (26), which extends between the two sidewalls (52, 54) of the mounting bracket (32) and which embraces the upper corners of the reel support arm (26).

10. An mounting bracket (32, 34) as defined in the preceding claims provided with a boss (60_{,} 64, 70) for a cutter-head (10) according to any of the preceding claims.

## Revendications

1. Dispositif de coupe (10) comportant un rabatteur (24), qui est monté de manière à pouvoir tourner sur un étrier de fixation (32, 34), qui est monté sur un bras de support pivotant (26, 28) du rabatteur, possédant une section transversale de forme noncirculaire, notamment rectangulaire, **caractérisée en ce qu'**il est prévu entre le bras de support (26, 28) du rabatteur et l'étrier de fixation (32, 34), une distance qui permet une rotation de l'étrier de fixation (32, 34) par rapport au bras de support (26, 28) du rabatteur et qu'il est prévu entre l'étrie de fixation (32, 34) et le bras de support (26, 28) du rabatteur, au moins un dispositif de support (6.0, 70), qui empêche un décalage latéral des étriers de fixation (32, 34) sur le bras de support (26, 28) du rabatteur.

2. Dispositif de coupe (10) selon la revendication 1, **caractérisée en ce que** l'étrier de fixation (32, 34) comporte une paroi supérieure (50) et de parois latérales (52, 54), qui entourent les surfaces latérales et la surface supérieure du bras de support (26, 28) du rabatteur.

3. Dispositif de coupe (10) selon la revendication 1 ou 2, **caractérisée en ce que** le rabatteur (24) est supporté, à chacune de ses deux extrémités, par un étrier respectif de fixation (32, 34), qui est monté de manière à être translatable sur un bras de support pivotant du rabatteur.

4. Dispositif de coupe (10) selon la revendication 3, **caractérisée en ce que** respectivement un vérin de levage hydraulique (40, 42) est disposé entre chaque bras de support (26, 28) du rabatteur et un cadre du dispositif de coupe ((10).

5. Dispositif de coupe (10) selon la revendication 4, **caractérisée en ce que** l'un des vérins de levage (40) est un vérin de commande, qui soulève le bras de support (26) du rabatteur et que l'autre vérin de levage (42) est un vérin commandé, qui soulève l'autre bras de levage (46) du rabatteur, auquel cas pendant un remplissage initial des vérins de levage (40, 42) par un liquide hydraulique, le vérin de commande (40) est tout d'abord rempli et se déploie avant que le vérin commandé (42) soit rempli et se déploie, de sorte que tout d'abord un bras de support (26) du rabatteur est soulevé avant que l'autre bras de support (28) du rabatteur soit soulevé.

6. Dispositif de coupe (10) selon l'une des revendications précédentes, **caractérisée en ce que** le au moins un dispositif de support entre l'étier de fixation (32, 34) et le bras de support (26, 28) du rabatteur comprend un dispositif de support supérieur (64, 70) entré la paroi supérieure (50) de l'étrier de fixation (32, 34) et le bras de support (26, 28) du rabatteur.

7. Outil de coupe (10) selon l'une des revendications précédentes, **caractérisé en ce que** le au moins un dispositif de support entre l'étrier de fixation (32, 34) et le bras de support (26, 28) du rabatteur comprend des supports latéraux (60) entre les parois latérales (52, 54) de l'étrier de fixation (32, 34) et les surfaces latérales du bras de support (26, 28) du rabatteur, ces supports étant situés de préférence au moins approximativement sur un axe médian du bras de support (26, 28) du rabatteur.

8. Dispositif de coupe (10) selon la revendication 7, **caractérisé en ce que** les supports latéraux (60) possèdent une surface arrondie, qui est en contact avec le bras de support (26, 28) du rabatteur.

9. Dispositif de coupe (10) selon l'une des revendications précédentes, **caractérisée en ce qu'**au moins un dispositif de support entre l'étrier de fixation (32) et le bras de support (26, 28) du rabatteur comprend un support individuel (70) situé sur la face supérieure du bras de support (26) du rabatteur, qui s'étend entre les deux parois latérales (52, 54) de l'étrier de fixation (32) et qui comprend les coins supérieurs du bras de support (26) du rabatteur.

10. Etrier de fixation (32, 34) pourvu d'un support (60, 64, 70) tel que défini dans les revendications précédentes, pour un dispositif de coupe (10) selon l'une des revendications précédentes.
